Europäisches Patentamt

European Patent Office

Office européen des brevets

(19)

(11) Veröffentlichungsnummer: **0 211 139 B1**

# (12) EUROPÄISCHE PATENTSCHRIFT

(45) Veröffentlichungstag der Patentschrift: **12.06.91**

(21) Anmeldenummer: **86103766.1**

(22) Anmeldetag: **19.03.86**

(51) Int. Cl.⁵: **B07C 5/342**, B03B 9/06,
B65F 1/14

(54) **Anlage zur Trennung von Abfallhohlgläsern, insbesondere von Flaschen mindestens nach weiss- und nach Buntglas.**

(30) Priorität: **05.08.85 DE 3528069**

(43) Veröffentlichungstag der Anmeldung:
**25.02.87 Patentblatt 87/09**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**DE-B- 2 952 411**
**FR-A- 2 319 894**
**FR-A- 2 336 319**
**US-A- 3 179 247**

(73) Patentinhaber: **Mabeg Müll- und
Abfallbeseitigungs- gesellschaft mbH & Co.
oHG.
Am Stöckmannshof 2
W-4690 Herne 2(DE)**

(72) Erfinder: **Nolte, Hans
Fahrendelle 19
W-5810 Witten-Heven(DE)**

(74) Vertreter: **Herrmann-Trentepohl, Werner,
Dipl.-Ing. et al
Schaeferstrasse 18
W-4690 Herne 1(DE)**

## Beschreibung

Die Erfindung betrifft eine Anlage zur Trennung von Abfallhohlgläsern, insbesondere von Flaschen mindestens nach Weiß-und nach Buntglas gemäß dem Oberbegriff des Patentanspruches 1.

Die erfindungsgemäße Anlage ist insbesondere zur Aufbereitung des Glasanteiles von Haus-und Industriemüll bestimmt. Sie kann in zentralen Müllverarbeitungsanlagen vorgesehen werden, wenn ihr eine Sortierung des Gesamtmülls vorgeschaltet ist, welche dafür sorgt, daß nur die im Müll enthaltenen Hohlgläser and der erfindungsgemäßen Anlage ankommen, daß aber die übrigen Bestandteile des Mülls, insbesondere organische Abfälle, Kunststoffe und Metalle früher ausgeschieden werden. Das geschieht nach unterschiedlichen Aufbereitungsprinzipien, die nicht Gegenstand der Erfindung sind. Oder die erfindungsgemäße Anlage ist dezentral aufgestellt und beruht dann auf der Vorsortierung des Mülls durch die Müllanlieferer. In diesem Fall wird das Hohlglas mindestens in einen dem Glas vorbehaltenen Behälter abgeworfen.

Die Erfindung bezieht sich auf solche Anlagen, welche Weißglas von sogenanntem Buntglas trennen. Weißglas wird für Flaschen oder Einmachgläser, sowie unterschiedliches Gebrauchsglas benutzt. Das Weißglas ist wesentlich wertvoller als Buntglas. Buntglas ist in verschiedenen Farben vorhanden, wobei Buntgläser unter sich unterschiedlich wertvoll sind. Insbesondere ist das grüne Glas, das z.B. für Weinflaschen verwendet wird, als Altglas wertvoller als Braunglas, welches u.a. als Lichtschutz bei vitaminhaltigen Säften und Fruchtnektaren benutzt wird. Der Unterschied zu einer zentralen Müllverarbeitung gegenüber einer dezentralen Müllsammlung besteht u.a darin, daß die letztere unbearbeitetes Glas aufnimmt, d.h. in der Regel ungebrochene Hohlgläser, bei Flaschen oder Einmachgläsern nur ausnahmsweise Glasscherben, die jedoch relativ große Abmessungen aufweisen. Demgegenüber erreichen zentrale Müllverarbeitungsanlagen meistens nur zerbrochene Gläser, von denen der mit der Hand aussortierte Anteil relativ klein ist, so daß man meistens den größeren Anteil im Anschluß an eine Vorzerkleinerung sortiert, was im technischen Maßstab außerordentlich schwierig ist.

Die Erfindung unterscheidet sich jedoch von einer dezentralen Anlage. Hierbei sind die Behältnisse getrennte, meistens nebeneinander aufgestellte Container mit jeweils einer Einwurföffnung, durch die der Anlieferer die von ihm aussortierten Gläser getrennt nach ihren Farben einwerfen soll. Der Nachteil dieser dezentralen Anlagen besteht darin, daß Buntglas von Weißglas nicht mit der erforderlichen Reinheit getrennt gehalten wird. Das beruht wenigstens zum Teil darauf, daß bereits ein Anteil von mehr als 1 % Buntglas im Weißglas dessen Verwendung als Weißglasmasse ausschließt. Soweit die vorbekannten dezentralen Anlagen außerdem noch Grünglas von Braunglas trennen, ergeben sich die gleichen Reinheitsanforderungen and die zur Herstellung von Grünglas verwendeten Glasmassen. Die Verunreinigung der jeweils wertvolleren Sorten mit Bestandteilen der weniger wertvollen Gläser beruht im wesentlichen auf der Unachtsamkeit der Müllanlieferer. Wenn man versucht, das in den Container eingeworfene Glas nachträglich auf die erforderliche Reinheit zu bringen, wird dafür ein erheblicher Aufwand notwendig, der darauf beruht, daß der größte Teil der Glasmasse aus weitgehend zerbrochenem Glas besteht, das nicht von Hand aussortiert werden kann.

Die Erfindung setzt eine Anlage als bekannt voraus (US-A-3 179 247), mit der Partikel unterschiedlicher optischer Eigenschaften, z. B. Salze, die in Form eines fortlaufenden Stromes aus einem Fülltrichter auf einen Rütteltisch fallen vereinzelt und an einer Lichtquelle vorbeigeführt werden, welche die vereinzelten Partikel erkennt, die auf eine Prallplatte gelenkt und im freien Fall mit Hilfe von Luftstrahlen nach zwei Sorten in zwei Sammelbehälter gelenkt werden. Eine derartige Anlage ist für dezentrale Sammlungen von Abfallhohlgläsern der bezeichneten Art nicht geeignet. Sie kann nicht mehr als zwei Sorten sortieren. Sie setzt eine erhebliche Bauhöhe voraus, ist relativ kompliziert aufgebaut und schließt den Eingriff der sortierenden Person nicht aus, wodurch es zu Fehlsortierungen kommen kann und Gegenstände in das gesammelte Glas geraten, die es zur Weiterverarbeitung unbrauchbar machen.

Eine ebenfalls bekannte Anlage (FR-A-2 319 894) kann nur ganze Flaschen und damit nicht alle vorkommenden Abfallhohlgläser oder größere Scherben sortieren. Hierbei werden nämlich die Flaschenhälse von einer optoelektronischen Einrichtung durchstrahlt, welche die Farben des jeweiligen Flaschenhalses ermittelt, um derart weiße, grüne und braune Flaschen gleichen Formats zu sortieren. Diese Anlage eignet sich deswegen auch nicht für die Sortierung von Abfallhohlglas am Sammelort und schließt auch nicht die Einflußnahme einer sortierenden Person aus.

Bei einer anderen bekannten Anlage (DE-B-29 52 411), von der die Erfindung ausgeht, sieht man für die Sortierung, u. a. von Abfallhohlglas in Form von Flaschen eine Vereinzelung der Gläser vor, die von einem Band in einen Fallschacht abgeworfen werden, in dem eine Lichtdurchstrahlung und -farberkennung nach den Farben weiß, braun und grün stattfindet, welche Abstreifer betätigt, die von einem unter dem Fallschacht angeordneten Band die erkannten Gläser in den Glasfarben zugeordneten Behälter lenken. Diese Anlage hat zusammen mit einer geeigneten Vereinzelungsvorrichtung eine Baugröße, die ihre dezentrale Aufstellung ausschließt. Maßnahmen, die den unbefugten Eingriff von Personen ausschließen, sind nicht getroffen. Die Anlage eignet sich daher nur für eine zentrale Aufbereitung von zuvor gesammelten Glasabfall.

Der Erfindung liegt die Aufgabe zugrunde, eine Anlage zum Sortieren von Abfallhohlgläsern zuschaffen, bei welcher der Glasabfall selbsttätig, d.h. ohne die Möglichkeit der Einflußnahme einer sortierenden Person am Sammelort nach Weißglas und anderem Glas zuverlässig sortiert wird.

Diese Aufgabe löst die Erfindung mit den Merkmalen des Patentanspruches 1. Zweckmäßige Ausgestaltungen und Ausführungsformen sind Gegenstand der Unteransprüche.

Gemäß der Erfindung ist die in zentralen und dezentralen Anlagen vorgesehene Sortierung nach dem visuellen Eindruck durch eine optoelektronische Sortierung ersetzt. Deshalb weisen die Behältnisse eine gemeinsame Zuführung in Form von dezentralen Containern eine gemeinsame Einwurföffnung auf, welche den unbearbeiteten Glasabfall aufnimmt. Der sich daran anschließende Förderer vereinzelt den unsortierten Glasabfall, der auch bei Glasbruch funktioniert und es außerdem ermöglicht, daß die optoelektronische Farberkennung an jedem Glaskörper und an allen Glaskörpern hintereinander durchgeführt wird. Dadurch kommt eine von menschlichen Einflußnahmemöglichkeiten unabhängige Sortierung zustande, welche der Reinheitsforderung an das sortierte Gut entspricht. Dieses sortierte Gut wird mit der von der optoelektronischen Früherkennung gesteuerten Ablenkeinrichtung gewonnen, welche einerseits die Sorten trennt, diese aber auch getrennt voneinander abführt, so daß sie in den Behältnissen nach Farbe sortiert ankommen. Dadurch wird das sortierte Gut vor mißbräuchlichem Einwurf geschützt und seine Reinheit gewährleistet.

Die Erfindung hat den Vorteil, daß sie die erforderliche Reinheit der unterschiedlich gefärbten Glasabfälle auf besonders wirtschaftliche Weise automatisiert. Man kann nämlich die Ablenkwirkung der Ablenkeinrichtung dem Glasabfall vorbehalten, der in der Gesamtmenge des Glasabfalls am seltensten vorkommt. Das ist in der Regel erfindungsgemäß das Weißglas. Die Ablenkeinrichtung funktioniert dann zweckmäßig nur bei einem weißen Abfallhohlglas, bleibt aber unbetätigt bei Buntglas, wenn Buntglas nicht weiter sortiert werden soll. Das hat den weiteren Vorteil, daß man unterschiedlich große Behältnisse für die Glassorten vorsehen kann, deren Volumen dem Anteil des jeweiligen Glases in der Gesamtmenge des Glasabfalls entspricht. Diese Behältnisse können längs des Förderweges hintereinander angeordnet werden, wobei man Weißglas am Ende des Förderweges anordnet. Das hat den Vorteil, daß Glasbruch nicht in das Weißglas gelangen kann, das dementsprechend dem ganzen Weißglas bzw. dem gröberen Weißglasbruch vorbehalten bleibt, weil diese Körper die größere kinetische Energie entwickeln.

Die Erfindung hat ferner den Vorteil, daß sie auch Verluste aufgrund nicht beeinflußbarer Ursachen weitgehend verhindert. Das gilt z.B. für Weißgläser mit aufgeklebten Etiketten, die als solche von der Elektronik nicht erkannt werden. Die Sortierung ordnet daher im Zweifel ein etikettiertes Glas dem Buntglas zu und hält auf diese Weise das Weißglas sauber. Das Ergebnis ist eine fast vollständige Reinheit des Weißglases bzw. des Grünglases, wenn auch auf diese Glassorte erfindungsgemäß das Abfallglas sortiert wird.

Für die Verwirklichung der Erfindung an dezentralen Müllsammelstellen ist das fördernde Organ besonders einfach aufgebaut, weil es aus einer unbeweglichen Rutschfläche besteht und erteilt dem eingeworfenen Abfallglas eine hohe kinetische Energie, die auf der geringen Reibung von Glas auf Metall beruht. Die Eingangsöffnung des Rohres, in dem die Rutschfläche ausgebildet ist, dient bei dieser Ausführungsform als Vereinzelungsvorrichtung, die natürlich von dem Anlieferer betätigt wird.

Dabei ist die gesamte, für die Sortierung des eingeworfenen Altglases entscheidende Vorrichtung jeglicher Einflußnahme von außen, entzogen, weil man sie in den Behälter einbaut. Dieses Merkmal der Erfindung eignet sich vor allem für die beschriebene Rohrbauform des Förderers. Es hat den Vorteil, daß die hohe kinetische Energie von unzerbrochenem Weißglas als zusätzliches Kriterium der Trennung funktioniert, so daß nur unzerbrochenes Weißglas bzw. entsprechend große Weißglasscherben überhaupt das für Weißglas vorgesehene Behältnis erreichen können.

Die erfindungsgemäß vorgesehene Ablenkeinrichtung wird mit dem Patentanspruch 2 in eine zweckmäßige Ausführungsform gebracht, weil die Klappenbauart sowohl als Ablenkeinrichtung infolge der auf den Klappen ausgebildeten Prallflächen funktioniert, aber auch das Gut vollständig abbremsen kann, um es daran zu hindern, in ein falsches Behältnis zu gelangen. Wird nämlich die erfindungsgemäße Anlage zum Sortieren von zwei Glasabfallsorten verwendet, so kann sich die Ablenkeinrichtung auf eine Trennwandaussparung beschränken und diese mit einem z.B. zweiflügeligen Tor versperren. Das geschlossene Tor wirkt dann für Buntglas als Prallfläche. Erkennt das Lichtdurchstrahlungsgerät ein Abfallglas als Buntglas, so bleibt das Tor geschlossen, das betreffende Glas prallt gegen das Tor und fällt in den vor dem Tor angeordneten Behälter für Buntglas. Ein als Weißglas erkanntes Abfallglas wird dagegen durch das geöffnete Tor in dem hinter der Aussparung einer Trennwand angeordneten Behälter für Weißglas geleitet.

Die erfindungsgemäße Anlage beschränkt sich nicht auf das Sortieren von Glasabfall lediglich nach zwei Kriterien, d.h. nach Weißglas und Buntglas. Gemäß dem Patentanspruch 3 ist die Anlage vielmehr so ausgebildet, daß sie drei Behältnisse enthält, die es ermöglichen, neben der Trennung von Weißglas und Buntglas auch das Buntglas noch einmal zu sortieren und dadurch Braun- von Grünglas zu unterscheiden. Bei dieser Anlage ist die Ablenkeinrichtung mit einer zusätzlichen Schwenkklappe versehen, die von einem zweiten Lichtdurchstrahlungsgerät gesteuert wird. Passiert ein Abfallglas das erste Lichtdurchstrahlungsgerät, so wird lediglich Weiß- von Buntglas unterschieden und sortiert. Weißglas gelangt durch das geöffnete Tor in den Weißglasbehälter. Passiert Buntglas das erste Lichtdurchstrahlungsgerät, so bleibt das Tor geschlossen. Das zweite Lichtdurchstrahlungsgerät unterscheidet jedoch zwischen Braun- und Grünglas. Je nach Färbung wird sodann die Schwenkklappe betätigt, um entweder Braunglas in das eine oder Grünglas in das andere Behältnis zu leiten, nachdem oder bevor es vor dem geschlossenen Tor abgeprallt ist. Dadurch ist es möglich, neben reinem Weißglas z.B. auch Grünglas mit hohem Reinheitsgehalt zu sortieren und dadurch der Tatsache Rechnung zu tragen, daß Grünglas der wertvollere Rohstoff im Vergleich zu Braunglas ist.

Die von den Lichtdurchstrahlungsgeräten stammenden Signale werden erfindungsgemäß elektronisch aufgearbeitet und als Steuersignale an die Ablenkeinrichtung weitergegeben. Zweckmäßig ist es insbesondere bei dezentralen Müllsammelstellen, die erfindungsgemäße Anlage netzunabhängig zu machen, was Gegenstand des Patentanspruches 4 ist.

Man kann insbesondere bei dieser Ausführungsform der erfindungsgemäßen Anlage auch dafür sorgen, daß sich die Anlage weitgehend den Anforderungen anpaßt, die an sie von den Müllanlieferern gestellt werden. Das geschieht mit den Merkmalen des Patentanspruches 5 so, daß die Sortiereinrichtung sich selbsttätig aus- und einschaltet, sobald Altglas angeliefert wird.

Man kann diese Ausführungsform unterschiedlich ausführen. Dafür kommen mechanische Ausführungen in Form eines Mikroschalters in Betracht, dessen Schaltelement aus einem in die Führung hineinreichenden Draht besteht. Dieser Draht wird durch das eingeworfene Altglas umgeklappt und schaltet so die gesamte Vorrichtung ein. Es ist aber auch möglich, eine solche Ausführungsform elektronisch und damit berührungsfrei auszuführen.

In den einfacheren Ausführungsformen der Erfindung, welche vorzugsweise mit Lenkklappen arbeiten, ist es zweckmäßig, die Klappenbewegung mit möglichst geringem Aufwand der Vorrichtungen zu bewegen, welche eine lange Lebensdauer haben. Dafür bietet sich an, die Lenkklappen jeweils mit einer Feder vorzuspannen und durch Magnetschalter zu betätigen. Im allgemeinen verwendet dazu der Magnetschalter eine Sperre, die die betreffende Lenkklappe in einer Stellung hält, so daß die Lenkklappe beim Lösen der Sperre durch Federkraft geöffnet wird und danach sofort wieder in ihre geschlossene Stellung zurückschnellt.

Die Erfindung wird im folgenden anhand mehrerer Ausführungsbeispiele dargestellt und näher beschrieben. Es zeigen

Fig. 1     schematisch und im Längsschnitt eine Anlage gemäß der Erfindung für eine dezentrale Müllsammelstelle,

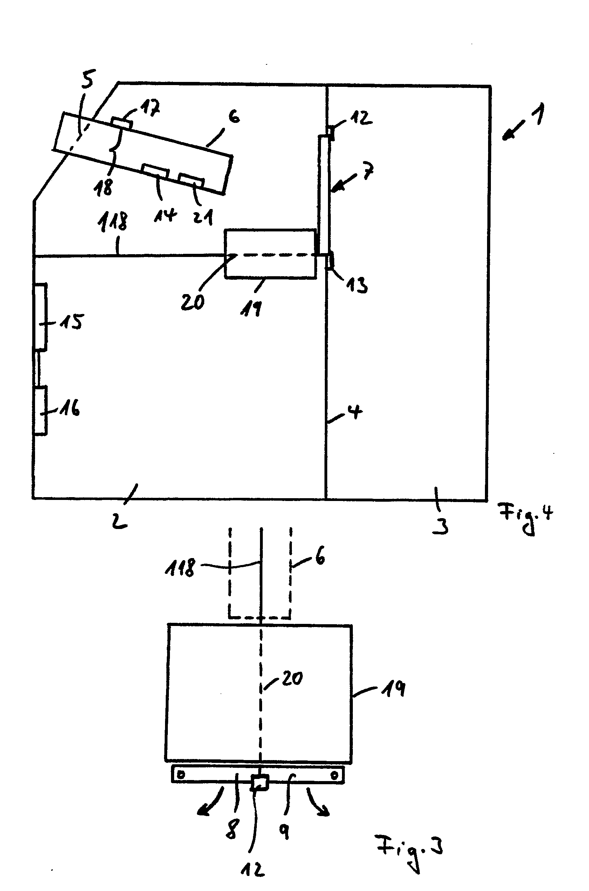

Fig. 2     eine Einzelheit der Fig. 1 zur Verdeutlichung einer Lenkklappenanordnung, die in Ansicht wiedergegeben ist,

Fig. 3     eine Ablenkeinrichtung gemäß der Erfindung für eine Anlage, welche Altglas nach drei Sorten sortiert,

Fig. 4     eine Draufsicht auf ein Behältnis für eine Anlage, für die das Klappensystem nach Fig. 3 vorgesehen ist im Längsschnitt,

Fig. 5     ein Prinzipschaltbild für die optoelektronische Einrichtung, die zur Betätigung des Gegenstandes der Fig. 2 verwendet wird,

Fig. 6     eine Draufsicht auf eine abgeänderte Ausführungsform einer erfindungsgemäßen Anlage, die ebenfalls Abfallglas nach drei Sorten trennt,

Fig. 7     eine Ansicht in Richtung des Pfeiles VII der Fig. 6,

Fig. 8     eine abgebrochene Ansicht in Richtung des Pfeiles VIII der Fig. 6 und

Fig. 9     ein Blockschaltbild.

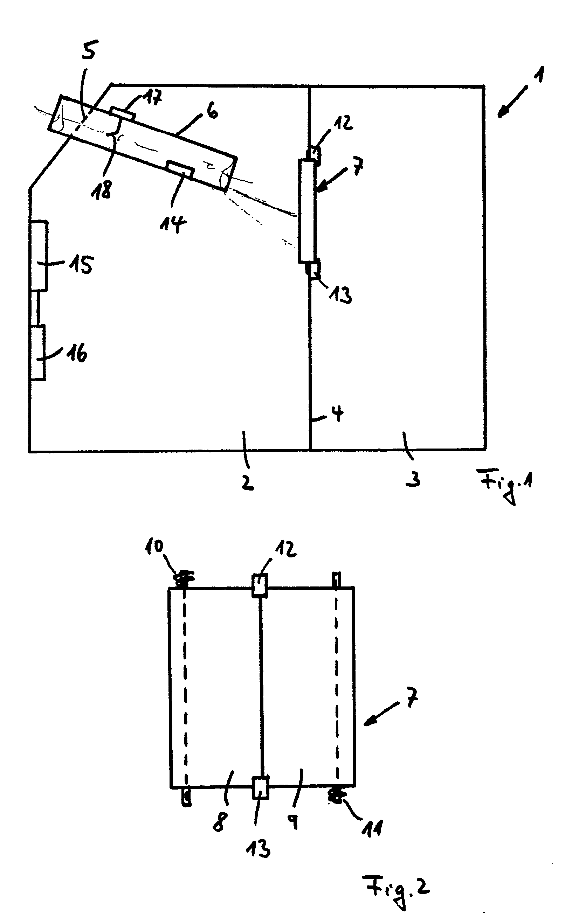

In den Zeichnungen ist eine Anlage gemäß der Erfindung allgemein mit 1 bezeichnet. Gemäß dem Ausführungsbeispiel nach Fig. 1 besteht sie aus zwei sogenannten Depotcontainern 2 und 3, die die Behältnisse bilden, in denen das sortierte Glas abgelagert wird. Diese Behältnisse bilden eine Einheit, in der sie durch eine Trennwand 4 abgeteilt sind. Die Einheit stellt einen Behälter dar, der beispielsweise aufgestellt wird. An seiner Oberkante weist die Behälterwand eine Aussparung 5 auf, an die sich ein Förderer unmittelbar anschließt. Gemäß dem Ausführungsbeispiel handelt es sich um ein Förderrohr 6, das schräg nach innen und unten orientiert ist. Das Rohr 6 endet in einem festen Abstand von der Trennwand 4. Entsprechend einer Wurfparabel, der das Altglas nach Verlassen des Rohres folgt, ist in der Trennwand 4 eine Ablenkeinrichtung 7 angeordnet. Sie besteht aus Lenkklappen, die ein zweiflügeliges Tor bilden. Die Lenkklappen 8 und 9 des Tores lassen sich in horizontaler Richtung nach entgegengesetzten Seiten auseinanderbewegen. Dazu dienen Federn 10 und 11, deren Vorspannung mit Hilfe von Magnetschaltern 12 und 13 aufgehoben werden kann. In der unteren Hälfte des Rohres, an der die eigentliche Rutschfläche ausgebildet ist, befindet sich ein Lichtdurchstrahlungsgerät 14. Über eine Steuerelektronik 15 führt es Signale auf die Magnetschalter 12 und 13. Zur Stromversorgung der Teile dient eine Spannungsquelle 16 in Form einer 12-Volt-Batterie, welche an der Innenseite der Anlage 1 angeordnet ist. Zwischen Spannungsquelle 16 und Lichtdurchstrahlungsgerät 14 liegt ein Mikroschalter 17. Der Mikroschalter 17 wird mit Hilfe eines Drahtes 18 geschaltet, der in die Führung 6 hineinreicht und von den eingeworfenen Glasteilen ausgelenkt wird.

Wird bei einer solchen Vorrichtung z.B. eine aus Weißglas bestehende Flasche eingeworfen, so rutscht diese in dem Rohr ab und betätigt zunächst den Mikroschalter 17, weil sie den Draht 18 umlegt. Dadurch wird das Lichtdurchstrahlungsgerät 14 eingeschaltet. Es liefert ein Signal über die Steuerelektronik 15 an die Magnetschalter 12 und 13, die dadurch die beiden Längsklappen 8 und 9 augenblicklich öffnen. Die in dem Rohr abrutschende Flasche verläßt am Ende des Rohres die Rutschfläche und fliegt frei durch das mit den ausgeschwenkten Lenkklappen geöffnete Tor in den Innenraum des für Weißglas bestimmten Behältnisses 3. Mit Hilfe einer Verzögerungsschaltung wird der Stromkreis der Lenkklappen so lange gehalten, bis die Flasche das Tor passiert hat. Folgt eine Buntglasflasche, so wird der Mikroschalter 17 ebenfalls umgelegt und das Lichtdurchstrahlungsgerät 14 eingeschaltet. Da aber die Anordnung so getroffen ist, daß nur bei einem Weißglas die Lenkklappen der Ablenkeinrichtung 7 betätigt werden, trifft die Buntglasflasche im freien Fall auf das geschlossene Tor, prallt davon ab und verbleibt im Behältnis 2, das wegen des größeren Anteiles von Buntglas im Abfallglas größer als das Behältnis 3 für Weißglas ausgebildet ist.

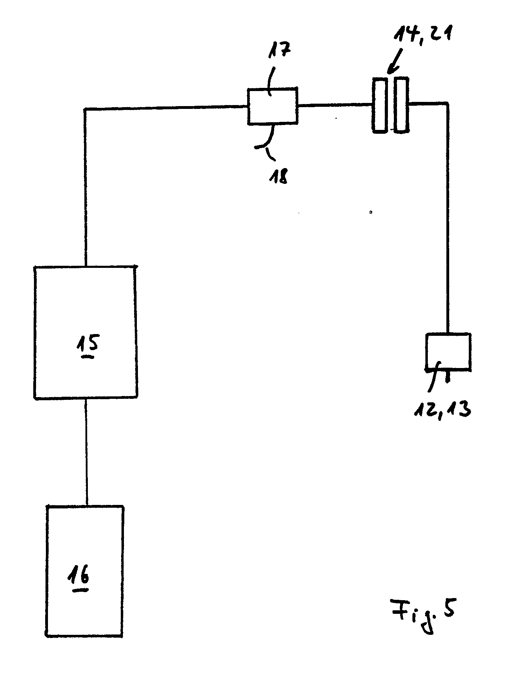

In der Ausführungsform der Erfindung nach den Fig. 3 bis 5 sortiert die Anlage nach Weißglas, Grünglas und Braunglas. Zu diesem Zweck ist eine weitere Trennwand 18 vorgesehen, welche das Behältnis für Buntglas unterteilt. Gemäß der Ausführungsform liegt die Trennwand in der Längsmittelebene des Rohres, das als Förderer dient. Zwischen dem Rohr 6 und dem Tor 7 wird die Oberkante der Zwischenwand 18 von einer Lenkklappe 19 gebildet, die um eine Achse 20 schwenkbar ist. Die Achse liegt horizontal in der erwähnten Längsmittelebene und verläuft im übrigen durch den Schwerpunkt der Lenkklappe 19. In der Ruhestellung ist dadurch die Lenkklappe 19 horizontal ausgerichtet. Zusätzlich zu dem Lichtdurchstrahlungsgerät 14 ist hinter diesem in Bewegungsrichtung des Glases ein weiteres Lichtdurchstrahlungsgerät 21 angeordnet. Diese optoelektronische Gerät ist so eingestellt, daß es zwischen Grün- und Braunglas unterscheiden kann. Wird eine Weißglasflasche eingeworfen, arbeitet die Vorrichtung nach dem eingangs beschriebenen Prinzip. Gelangt eine Grünglasflasche in das Rohr, so bleibt das Tor 7 geschlossen. Das Lichtdurchstrahlungsgerät 21 steuert über die Elektronik 15 die Schwenkklappe 20 so, daß sie zu der Seite herunterschwenkt, an der der für Grünglas vorgesehene Behälter steht. Die Grünglasflasche prallt gegen das geschlossene Tor 7 und rutscht über die Schwenkklappe 19 in den richtigen Behälter. Entsprechend wird mit Braunglasflaschen verfahren. Auf diese Weise lassen sich alle drei Sorten ohne die Einflußmöglichkeit der einwerfenden Anlieferer sortieren.

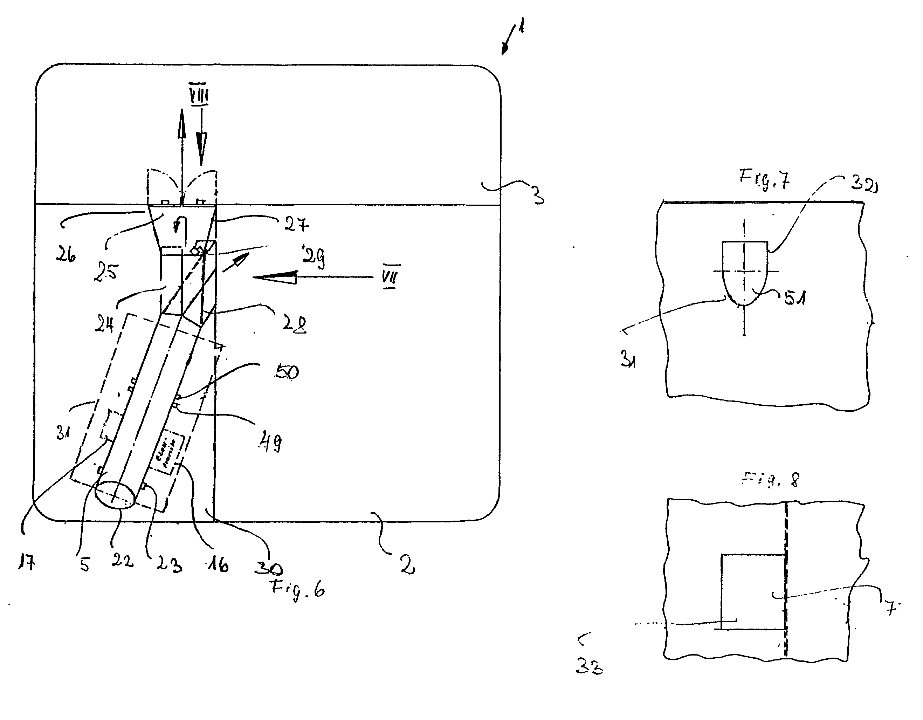

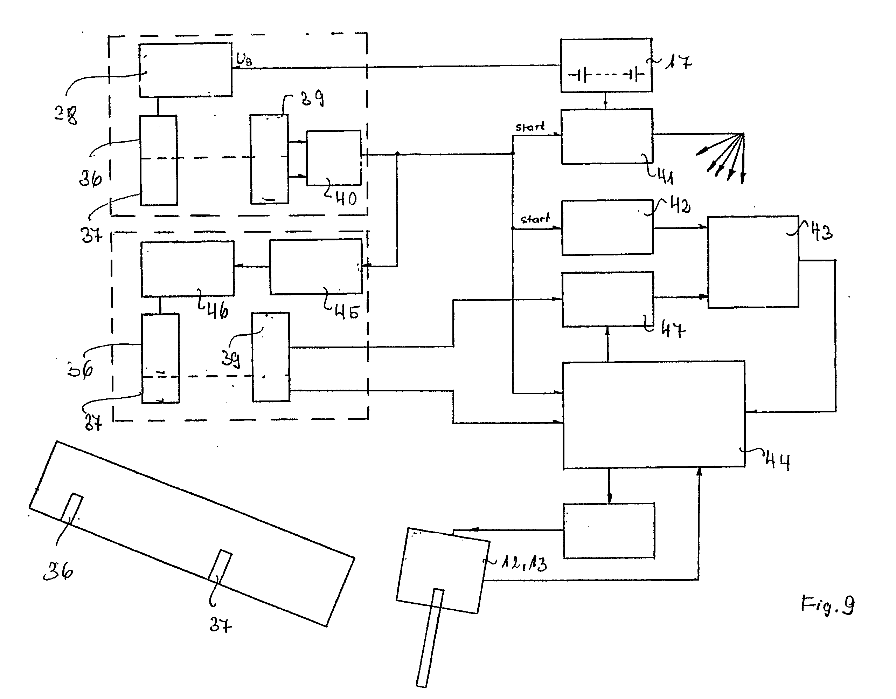

Die abgeänderte Ausführungsform nach den Fig. 6 und 9 ermöglicht einen Bausatz für die Sortiereinrichtung, welche von dem Hersteller des Behälters in diesen eingebaut wird. Unter einer Schutzhaube 31 befindet sich als Förderer dienende Rohr 6, dessen Öffnung 22 gegebenenfalls mit einer nicht dargestellten Blende dem Durchmesser von Glasflaschen angepaßt ist und deswegen selbsttätig dafür sorgt, daß die Flaschen nur nacheinander von einem anlieferer eingeworfen werden können, wodurch diese in dem anschließenden Rohr 6 vereinzelt sind. Z.B. beschränkt die Öffnung 22 den maximalen Flaschendurchmesser auf 150 mm. Die Länge des Rohres 5 ergibt sich aus der maximalen Flaschenlänge mit z.B. 350 mm. Die nachfolgend noch näher zu erläuternde Weißglassortierung funktioniert bis zu einem minimalen Durchmesser, der im Beispiel ca. 55 mm beträgt. Darunter liegendes Weißglas gelangt selbsttätig in einen der Buntglasbehälter.

Diese Sortiereinrichtung ist so ausgelegt, daß sie in einem bestimmten Temperaturbereich funktioniert. Der Bereich liegt beispielsweise zwischen -20° C bis +50° C bezogen auf die Umgebung der Steuer- und Optoelektronik. Für deren Betrieb ein Satz handelsüblicher Trockenbatterien, wobei man mit etwa 0,5 Mio Sortiervorgängen rechnet.

Zu diesem Zweck ist die Masse der beweglichen Teile reduziert. Die räumliche Trennung der eingeworfenen Flaschen wird deswegen nicht elektronisch bzw. elektrisch bewirkt, sondern durch die kinetische Energie der Flaschen. Dazu wird eine eingeworfene Flasche über ein Gefälle des Rohres 6 von ca. 25° gleichmäßig über eine Länge von ca. 750 mm beschleunigt. Auf der Beschleunigungsstrecke werden die Flanschen an der elektrooptischen Einrichtung vorbeigeführt. Gemäß der Darstellung der Fig. 6 ersetzt dort die Lichtschranke 23 den vorher beschriebenen Mikroschalter und liegt wie dieser unmittelbar hinter der Einwurföffnung 23. Diese Lichtschranke ist dauernd eingeschaltet, erzeugt jedoch zur Entlastung der Batterie 17 Lichtblitze in schneller Folge. Diese Lichtschranke hat zwei Funktionen. Einerseits erkennt sie jeden Abfallglaskörper, der den minimalen Durchmesser der Weißglaserkennung überschreitet. Andererseits kontrolliert sie die eigentliche Weißglaserkennung.

Diese Weißglaserkennung arbeitet mit zwei Lichtschranken. Die obere, d.h. die zuerst unterbrochene Lichtschranke 36 erkennt, daß sich eine Flasche mit ihrem vollen Durchmesser und nicht etwa nur mit ihrem Hals im Lichtschrankenbereich befindet. Die zweite Lichtschranke 37 mißt mit Hilfe der angeschlossenen Elektronik die Mittelwerte der Lichtdurchlässigkeit über eine Breite von ca. 50 mm und über eine definierte kleine Länge der Flasche, die zur Unterscheidung ausreicht. Sie ist im allgemeinen so gering, daß der Flaschenrest ausreicht, der vor oder nach einem Bauchetikett der Flasche ausgemessen wird. Wird der vorher justierte Meßwert erreicht, so werden die Magnete 12, 13 erregt und öffnen die Absenkklappen, so daß die Weißglasflasche in das Behältnis 3 fliegt.

Die Batterie 17 liefert die Spannung $U_B$ an den getakteten LED-Treiber 38, welcher temperaturkompensiert ist. Die beiden Lichtschranken und der Farbempfänger 39 sind über die UND-Funktion 40 miteinander verknüpft, welche die geregelte Stromversorgung 41 und die Sample + hold-Schaltung 42 steuert. Denn hierdurch wird der Komparator und die Weißwertschwelle 43 sowie die zentrale Logik und Ablaufsteuerung 44 eingeschaltet.

Über ein Zeitglied 45 wird der LD-Treiber 46 der Lichtschranken 36 und 37 geschaltet. Von den Farbempfängern 39 gelangen die Signale auf den Integrator 47 und zur zentralen Logik und Ablaufsteuerung 44. Diese ist mit den Zugmagneten 12, 13 der Verriegelung der Lenkklappen über den Treiber 48 rückgekoppelt.

Im Ausführungsbeispiel der Fig. 6 ist die beschriebene Elektronik bei 16 untergebracht und mit ihren Lichtschranken schematisch bei 49 dargestellt. Eine weitere, entsprechend aufgebaute Elektronik schließt sich bei 50 an. Sie dient zur Steuerung des Magnetschalters 29 einer Ablenkklappe 48, sobald ein Grünglas erkannt worden ist. Diese Ablenkklappe verschließt eine Aussparung 51, deren Querschnitt sich aus einem parabolischen Abschnitt 31 und einem offenen, oben angeordneten Geviert 32 zusammensetzt. Ist die Aussparung mit der Klappe verschlossen, so lenkt diese die Grünglasflasche auf eine Gleitschiene 24. Die Grünglasflasche fällt dann zwischen festen Leitwänden 26 und 27, welche bis zu der geschlossenen Aussparung 7 reichen, durch die hinter der Gleitschiene liegende Öffnung 24 in das Behältnis 30.

**Ansprüche**

1. Anlage (1) zur Trennung von Abfallhohlgläsern in Form von Flaschen, Einmachgläsern und ähnlichen Gebrauchsgläsern mindestens nach Weiß- und Buntglas, bei der der unbehandelte Glasabfall nach seiner Farbe sortiert und danach getrennt gehalten und abgeführt und in Behältnisse (2, 3, 30) eingebracht wird, die jeweils einer Sorte zugeordnet sind und bei der zur Sortierung ein Förderer (6) dient, dessen förderndes Organ an der Aufgabeseite den unsortierten Glasabfall aufnimmt, der vereinzelt und auf dem Förderweg an mindestens einem Lichtdurchstrahlungsgerät (14, 49, 50) vorbeigeführt wird, welches eine am Ende des Förderweges angeordnete Ablenkeinrichtung (7) steuert, welche zur Trennung der Sorten und zu deren Abführung dient, dadurch gekennzeichnet, daß der Förderer (6) in einen Behälter eingebaut ist, der eine mit der Aufgabe (22, 5) des Förderers (6) zusammenfallende Einwurföffnung (22, 5) aufweist, die eine den Weißgläsern entsprechende Weite aufweist und die Vereinzelungsvorrichtung bildet, daß die zur Aufnahme der Sorten dienenden Behältnisse (2, 3, 30) mit wenigstens einer Zwischenwand (4) voneinander getrennt sind und daß der Förderer (6) auf eine Aussparung (51) der Zwischenwand (4) ausgerichtet ist, welche durch die Ablenkeinrichtung (7) verschließbar ist.

2. Anlage nach Anspruch 1, **dadurch gekennzeichnet,** daß die Ablenkeinrichtung aus einer oder mehrern Lenkklappen (8, 9, 28) besteht, welche Prallflächen für das sich mit Fördergeschwindigkeit bewegende Abfallhohlglas bilden.

3. Anlage nach einem der Ansprüche 1 oder 2, **dadurch gekennzeichnet,** daß drei Behältnisse - (2, 3, 30) vorgesehen sind und die Aussparung (7) mit zwei Längsklappen (8, 9) verschließbar ist, wobei eine weitere Lenkklappe (19, 28) vorgesehen ist, die dem unteren Ende des Förderers (5) zugeordnet ist und in den Förderer (5) zwei Lichtdurchstrahlungsgeräte (14, 21, 49, 50) zur Unterscheidung der Sorten eingebaut sind.

4. Anlage nach einem der Ansprüche 1 bis 3, **dadurch gekennzeichnet,** daß zur Versorgung der Lichtdurchstrahlungsgeräte (14, 21, 40, 50, 23) und der Ablenkeinrichtung (7) eine netzunabhängige Spannungsquelle (16) dient.

5. Anlage nach einem der Ansprüche 1 bis 4, **dadurch gekennzeichnet,** daß hinter der Vereinzelungsvorrichtung (22) in den Förderer (5) eine Einrichtung (17, 18, 23) eingebaut ist, welche elektrisch bzw. elekronisch einen minimalen Durchmesser der Weißglaserkennung feststellt und die Lichtdurchstrahlungsgeräte (14,21,49,50) aktiviert.

6. Anlage nach einem der Ansprüche 1 bis 5, **dadurch gekennzeichnet,** daß hinter der Vereinzelungsvorrichtung (22) ein Mikroschalter (17) eingebaut ist, dessen Schaltelement aus einem in den Förderer (5) reichenden Draht (18) besteht, welcher in Förderrichtung auslenkbar ist.

7. Anlage nach einem der Ansprüche 1 bis 5, **dadurch gekennzeichnet,** daß hinter der Vereinzelungsvorrichtung (22) eine Lichtschranke eingebaut ist, welche auf Weißglas reagiert und dauernd eingeschaltet ist, jedoch nur kurze Lichtblitze erzeugt.

8. Anlage nach einem der Ansprüche 1 bis 7, **dadurch gekennzeichnet,** daß jedes Lichtdurchstrahlungsgerät (14, 21, 49, 50) zwei Lichtschranken aufweist, von denen die von dem Altglas zunächst passierte Lichtschranke mit Hilfe der angeschlossenen Elektronik die Mittelwerte der Lichtdurchlässigkeit über eine vorgegebene Breite und über eine definierte geringe Länge des Altglases mißt, während die zweite, zuletzt passierte Lichtschranke dazu dient, den Minimaldurchmesser des Hohlglases zu erkennen.

9. Anlage nach einem der Ansprüche 1 bis 8, **dadurch gekennzeichnet,** daß die Längsklappen (8, 9, 19, 28) mit Hilfe von Federn - (10, 11) vorgespannt und mit Magnetschaltern (12, 13) entriegelbar sind.

10. Anlage nach einem der Ansprüche 1 bis 9, **dadurch gekennzeichnet,** daß die einer Klappe für Grünglas zugeordnete Trennwandaussparung (51) einen parabolischen Querschnitt (31) aufweist, welcher mit einem offenen Geviert (32) den Gesamtquerschnitt der Aussparung bildet.

## Claims

1. A device (1) for the separation of waste hollow glass articles in the form of bottles, preserving jars and similar utilitarian glass articles at least into transparent and coloured glass, wherein the unprocessed glass waste is sorted according to its colour and then kept separate and removed and placed into containers (2, 3, 30) which are respectively allotted to one type, and wherein a conveyor (6) is used for sorting whose conveying member receives on the feed side the unsorted glass waste which singly and on the conveying path is taken past at least one light beam device (14, 49, 50) which controls a diverting apparatus (7) arranged at the end of the conveying path, which is used to separate the types and to discharge them, characterised in that the conveyor (6) is fitted in a container which has a feed aperture (22, 5) coinciding with the feed (22, 5) of the conveyor (6) which has a width corresponding to the transparent glass and forms the separation device, that the containers (2, 3, 30) used to receive the types are separated from one another by at least one intermediate wall (4) and that the conveyor (6) is aligned in an opening (51) in the intermediate wall (4) which can be moved by means of the diverting apparatus (7).

2. A device according to Claim 1, characterised in that the diverting apparatus consists of one or more hinged flaps (8, 9, 28) which form breaker plates for the waste hollow glass moving at the speed of the conveyor.

3. A device according to one of Claims 1 or 2, characterised in that three containers (2, 3, 30) are provided and the opening (7) can be moved with two longitudinal flaps (8, 9), wherein a further hinged flap (19, 28) is provided which is arranged on the lower end of the conveyor (5) and in the conveyor (5) two light beam devices (14, 21, 49, 50) are fitted to differentiate between the types.

4. A device according to one of Claims 1 to 3, characterised in that a power source (16) independent of the mains supply is used to power the light beam devices (14, 21, 40, 50, 23) and the diverting apparatus (7).

5. A device according to one of Claims 1 to 4, characterised in that behind the separating device (22) in the conveyor (5) an apparatus (17, 18, 23) is fitted which determines a minimum diameter of the transparent glass recognition electrically or electronically and actuates the light beam devices (14, 21, 49, 50).

6. A device according to one of Claims 1 to 5, characterised in that behind the separation device (22) a microswitch (17) is fitted, whose switching element consists of a wire (18) extending into the conveyor (5) which can be deflected in the conveying direction.

7.  A device according to one of Claims 1 to 5, characterised in that behind the separating device (22) a light barrier is fitted which reacts to transparent glass and is permanently switched on but only produces short pulses of light.

8.  A device according to one of Claims 1 to 7, characterised in that each light beam device (14, 21, 49, 50) has two light barriers of which the light barrier first passed by the waste glass with the aid of the attached electronics measures the mean value of the transparency over a prescribed width and over a defined small length of the waste glass whilst the second light barrier, passed last, is used to determine the minimum diameter of the hollow glass.

9.  A device according to one of Claims 1 to 8, characterised in that the longitudinal flaps (8, 9, 19, 28) are prestressed with the aid of springs (10, 11) and are releasable by magnetic switches (12, 13).

10. A device according to one of Claims 1 to 9, characterised in that the separating wall opening (51) assigned to a flap for green glass has a parabolic cross-section (31) which forms the total cross-section of the opening with an open square (32).


**Revendications**

1.  Dispositif de triage (1) pour traiter des objets en verre creux jetés au rebut, tels que des bouteilles, bocaux de conserve en verre et objets usuels analogues en verre, en séparant au moins les objets en verre blanc de ceux en verre teinté, ces objets en verre mis au rebut sans préparation étant ainsi triés d'après leur teinte et envoyés dans des réceptacles (2,3,30) prévus chacun pour une catégorie, cette opération de triage s'effectuant au moyen d'un organe d'entrée (6) qui reçoit les objets en verre mis au rebut sans triage préalable, ces objets s'y trouvant engagés un par un sur un trajet où se trouve au moins un système (14,49,50) de mesure de la transparence lumineuse qui commande un système de déviation (7) disposé à l'extrémité du trajet d'entrée des objets en verre pour assurer le tri de ces objets en plusieurs catégories et leur évacuation, caractérisé en ce que l'organe d'entrée (6) est monté dans un récipient pourvu, pour recevoir les objets jetés au rebut, d'une ouverture (22,5) qui coïncide avec l'ouverture extérieure (22,5) de l'organe d'entrée (6), celle-ci ayant une largeur qui correspond à celle des objets en verre blanc et qui impose leur séparation un par un, en ce que les compartiments (2,3,30) prévus pour recevoir les différentes catégories d'objets triés sont séparés l'un de l'autre par au moins une cloison intermédiaire (4), et en ce que l'organe d'entrée (6) est dirigé vers une échancrure (51) de la cloison intermédiaire (4) pouvant être obturée par le système de déviation (7).

2.  Dispositif selon la revendication 1, caractérisé en ce que le système de déviation comporte un ou plusieurs volets articulés (8,9,28), qui constituent des surfaces de rebondissement pour les objets en verre creux jetés au rebut qui se déplacent à la vitesse que leur communique l'organe d'entrée.

3.  Dispositif selon l'une des revendications 1 ou 2, caractérisé en ce qu'il comporte trois réceptacles (2, 3,30), et en ce que l'échancrure (7) peut être obturée par deux volets longitudinaux (8,9), un autre volet de déviation (19,28) étant prévu, associé à l'extrémité inférieure de l'organe d'entrée (5), et celui-ci étant équipé de deux systèmes de mesure de la transparence lumineuse (14,21,49,50) pour une identification sélective suivant les catégories à trier.

4.  Dispositif selon l'une des revendications 1 à 3, caractérisé en ce que l'alimentation en courant des systèmes de mesure de la transparence lumineuse (14, 21, 40,50,23) et du système de déviation (7) est assurée par une source électrique (16) indépendante du secteur.

5.  Dispositif selon l'une des revendications 1 à 4, caractérisé en ce qu'il comporte un système électrique ou électronique (17,18,23), monté dans l'organe d'entrée (5) en aval du système (22) qui sépare les objets un par un, pour vérifier la valeur minimale du diamètre des objets en verre blanc et actionner en conséquence les systèmes (14,21,49,50) de mesure de la transparence lumineuse.

6.  Dispositif selon l'une des revendications 1 à 5, caractérisé en ce qu'il comporte un micro-contacteur (17) monté en aval du système (22) qui sépare les objets un par un, l'organe d'actionnement de ce micro-contacteur étant constitué par un fil métallique (18) en saillie à l'intérieur de l'organe d'entrée (5) et pouvant être rabattu dans le sens du mouvement des objets.

7. Dispositif selon l'une des revendications 1 à 5, caractérisé en ce qu il comporte une barrière lumineuse montée en aval du dispositif (22) qui sépare les objets un par un, cette barrière étant prévue pour réagir en présence des objets en verre blanc et fonctionnant en permanence, mais par éclats lumineux de courte durée.

8. Dispositif selon l'une des revendications 1 à 7, caractérisé en ce que chaque système (14,21,49,50) de mesure de la transparence lumineuse comporte deux barrières lumineuses, la première de ces barrières traversée par les objets en verre jetés au rebut étant associée à un système électronique pour mesurer les valeurs moyennes de la transparence lumineuse de ces objets en verre sur une largeur prédéterminée et une faible longueur définie, tandis que la deuxième barrière lumineuse que les objets en verre franchissent ensuite sert à vérifier le diamètre de ces objets en verre creux par rapport à une valeur minimale.

9. Dispositif selon l'une des revendications 1 à 8, caractérisé en ce que les volets longitudinaux (8,9,19, 28) sont sollicités élastiquement par des ressorts (10,11) et peuvent être déverrouillés par un système de relais à électro-aimants (12,13).

10. Dispositif selon l'une des revendications 1 à 9, caractérisé en ce que l'échancrure (51) de la cloison intermédiaire qui est associée à un volet pour le verre de teinte verte comporte un profil ayant une partie parabolique (31) associée à un cadre ouvert (32) pour constituer la totalité du passage offert par cette échancrure.

Fig. 1

Fig. 2

Fig. 4

Fig. 3

Fig. 5

Fig. 7

Fig. 8

Fig. 6

Fig. 9